# FASCICULE DE BREVET EUROPEEN

(11) **EP 1 319 921 B1**
(45) Date de publication et mention de la délivrance du brevet: **29.03.2006**
(21) Numéro de dépôt: 01811217.7
(22) Date de dépôt: 12.12.2001
(51) Int. Cl.: G01B 5/00, G01B 5/012, G01B 5/02, G01B 5/06

(54) **Colonne de mesure d'une dimension longitudinale**
Säule zur Messung einer longitudinalen Dimension
Column for measuring a longitudinal dimension

(43) Date de publication de la demande: 18.06.2003
(73) Titulaire: TESA SA, 1020 Renens (CH)
(72) Inventeur: Jordil, Pascal, 1612 Ecoteaux (CH); Zanier, Adriano, 1008 Prilly (CH)
(74) Mandataire: P&TS Patents & Technology Surveys SA

(56) Documents cités:
- EP-A- 1 089 051
- US-A- 4 924 598
- US-A- 5 040 308

## Description

La présente invention concerne une machine à mesurer, notamment une colonne de mesure de dimension longitudinale, par exemple une colonne de mesure de hauteur.

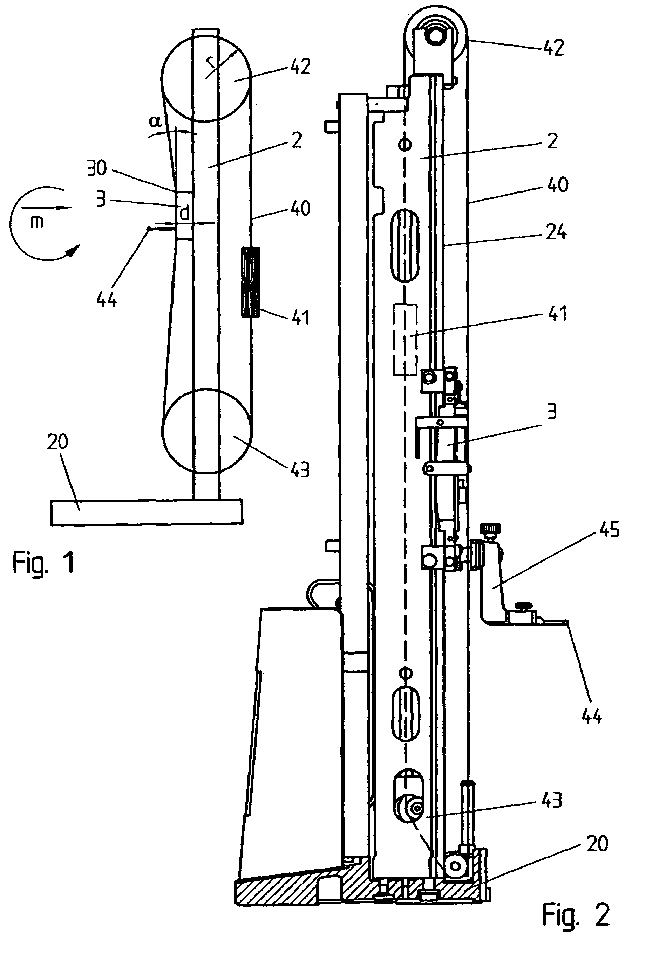

Des colonnes de mesure de hauteur sont décrites par exemple dans le document US4924598. Elles sont utilisées par exemple pour la mesure ou la comparaison de dimensions, par exemple dans des ateliers de mécanique. Une colonne de mesure représentée schématiquement sur la figure 1 comprend un bâti fixe 2 avec un socle 20, un chariot 3 pouvant se déplacer verticalement le long du bâti, un dispositif d'entraînement du chariot et un système de mesure de la position verticale du chariot. Une touche 44 est liée au chariot et destinée à être mise en contact avec la pièce à mesurer. Le socle peut être muni de moyens permettant de créer un coussin d'air afin de déplacer aisément la colonne de mesure de hauteur sur le plan de travail.

Le dispositif d'entraînement peut être de type manuel et actionné au moyen d'une manivelle, ou de type électrique et employer un moteur. La manivelle ou le moteur entraîne un câble ou une courroie 40 lié au chariot 3, ainsi qu'un contrepoids 41 se déplaçant en sens opposé au chariot. Le câble ou la courroie est tendu entre des poulies 42, 43. Le chariot 3 comporte des roulements non illustrés pour s'appuyer sur des rails de guidage liés au bâti.

Le système de mesure électronique permet de déterminer la position du chariot, et donc de la touche, et de l'afficher sur un affichage électronique. La résolution et la précision que l'on attend de ce type de colonnes de mesure est de l'ordre du micron.

Cette précision dépend pour une part importante de la force de contact entre la touche 44 et la pièce à mesurer. Une force de contact importante entraîne une flexion de la touche et/ou de la pièce, voire une déformation élastique du matériau, pouvant influencer la mesure. La force de contact entre la touche et la pièce à mesurer doit donc être minime ou, en tous les cas, identique à chaque mesure.

En raison de contraintes liées à l'encombrement maximal admissible et aux précisions de fabrication, la courroie 40 n'est pas toujours rigoureusement parallèle au bâti 2. En particulier, il a été constaté dans le cadre de cet invention que l'angle d'attache α de la courroie 40 sur le chariot 3 varie selon la position longitudinale du chariot. C'est notamment le cas lorsque le chariot se trouve près d'une des poulies inférieure 43 ou supérieure 42 de la colonne1 et que le rayon r des poulies est différent de la distance d entre le bâti 2 et le point d'attache 30 de la courroie 40 sur le chariot. C'est aussi le cas lorsque la position du centre des poulies 42, 43 par rapport au bâti n'est pas contrôlée avec précision. Dans ces circonstances, la force de traction de la courroie sur le chariot s'exerce selon une direction non verticale, et provoque l'application d'un moment m selon un axe horizontal parallèle au plan du chariot 3. Ce moment influence la force de contact entre la touche et la pièce, en sorte que la précision de mesure varie selon la position longitudinale du chariot.

Le brevet US5040308 décrit une colonne de mesure dans laquelle le chariot de mesure est relié au brin supérieur de la courroie d'entraînement par l'intermédiaire d'un membre d'ajustement. Le chariot peut coulisser par rapport au membre d'ajustement dans la direction de l'axe de mesure. Toutefois, l'articulation entre le membre d'ajustement et le chariot permet uniquement un déplacement selon l'axe de mesure. Les composantes de la force de traction perpendiculaires à l'axe de mesure s'exercent donc sur le chariot et indirectement sur la touche.

La demande de brevet EP223736 décrit une colonne de mesure dans laquelle le chariot de mesure est relié à la partie supérieure de la courroie d'entraînement par l'intermédiaire d'un cadre. Le chariot peut pivoter et coulisser horizontalement par rapport au cadre. Aucun moyen en revanche n'est prévu pour permettre le pivotement du chariot par rapport au cadre selon un axe horizontal parallèle au plan du chariot et du cadre. Tout moment exercé par le câble d'entraînement sur le cadre sera donc immanquablement répercuté sur la touche.

Par ailleurs, la touche de mesure est disposée selon un axe y parallèle au plan du chariot et du cadre. Cette construction est peu avantageuse, car la touche se trouve loin des surfaces de référence constitués par les rails de guidage sur le bâti. De plus la touche se trouve proche d'une arête du bâti qui risque d'entrer en contact avec certaines parties de pièce de forme complexe.

La demande de brevet européen EP1089051 décrit une colonne de mesure comprenant un premier chariot mobile, portant une touche de mesure, pouvant coulisser par rapport à un second chariot mobile qui est guidé en translation par le bâti. Le mouvement relatif entre le premier chariot et le second chariot est limité en ampleur par un mécanisme à force constante, qui agit sur le moteur d'entraînement, et en direction par un jeu de roulements, qui déterminent un mouvement de translation selon l'axe de mesure du premier chariot par rapport au second chariot.

Un but de la présente invention est donc de proposer une colonne de mesure de hauteur dans laquelle ces problèmes sont résolus.

En particulier, un but de la présente invention est de proposer une colonne de mesure dans laquelle le système d'entraînement exerce sur le chariot une force qui ne comporte qu'une composante verticale.

Ces buts sont atteints selon l'invention au moyen d'une colonne de mesure comprenant les éléments de la revendication indépendante.

En particulier, ces buts sont atteints au moyen d'une colonne de mesure de dimension longitudinale comprenant un bâti, un chariot pouvant se déplacer le long d'un axe de mesure le long du bâti, une touche liée au chariot et destinée à être mise en contact avec la pièce à mesurer, un dispositif d'entraînement du chariot comprenant un câble ou une courroie pour entraîner ledit chariot en déplacement le long dudit axe, un système de mesure de la position dudit chariot le long dudit axe, et dans lequel un élément d'articulation entre ledit câble ou ladite courroie et ledit chariot permet un pivotement au moins selon un axe de pivotement parallèle au plan du chariot.

Cette construction a l'avantage de ne répercuter sur le chariot, et donc sur la touche, que les composantes verticales de la force de traction exercée par le câble ou la courroie. On évite ainsi les erreurs de mesure dues à une composante horizontale de cette force, notamment lorsque le chariot se trouve proche d'une des deux poulies.

L'invention sera mieux comprise à la lecture de la description annexée et illustrée par les figures qui montrent :
La figure 1 une vue schématique des principaux composants d'une colonne de mesure de hauteur.
La figure 2 une vue latérale d'une colonne de mesure de hauteur complète

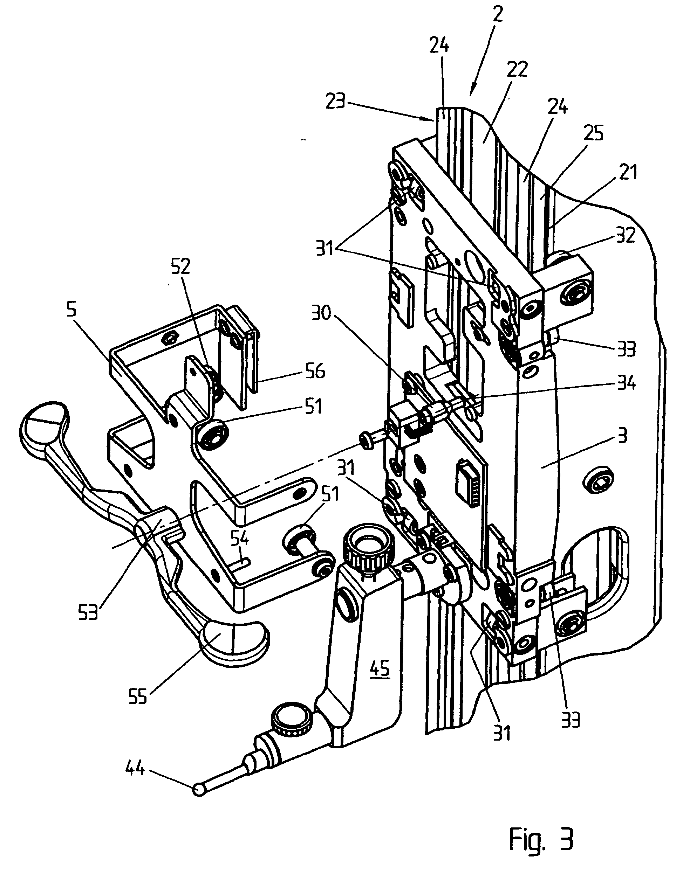

La figure 3 une vue en éclaté du chariot de mesure dans une colonne de mesure selon l'invention.

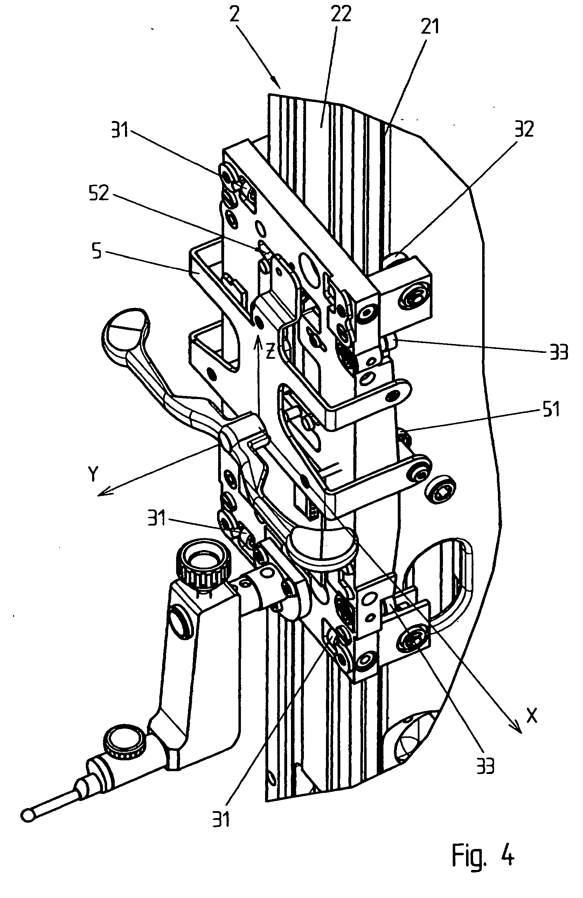

La figure 4 une vue en perspective du chariot de mesure dans une colonne de mesure selon l'invention.

Un exemple de colonne de mesure selon l'invention comprend un bâti 2 monté perpendiculairement sur un socle 20. Le bâti comprend une face avant munie d'une règle 22 par exemple capacitive, inductive ou magnétique et de rails de guidage 24. La règle 22 est par exemple constituée par une règle de verre munie d'électrodes capacitives ou magnétiques. La règle est munie d'électrodes permettant une mesure de position absolue ou relative au moyen d'un capteur monté sur le chariot 3. Les rails 24 peuvent être rapportés ou de préférence usiné sur bâti 2 et constituent une surface d'appui plane sur laquelle se déplacent les roulements 31 du chariot 3. D'autres rails 21 sur une face arrière du bâti 2 forment une surface de roulement arrière pour des roulements supplémentaires 32. Des roulements latéraux 33 peuvent en outre s'appuyer sur des rails latéraux 25. La position du chariot 3 dans un plan horizontal x-y est donc entièrement définie par les rails 21, 24, 25.

Un mécanisme d'entraînement lié au bâti comprend une poulie supérieure 42 et une poulie inférieure 43. Le mécanisme d'entraînement comprend en outre un moteur non représenté permettant d'entraîner en rotation une des deux poulies, ainsi qu'un câble ou une courroie 40 formant une boucle tendue entre les deux poulies. Le chariot 3 est entraîné par le câble ou la courroie 40 et peut ainsi être déplacé selon l'axe z vertical au moyen du moteur. Un contrepoids 41 fixé sur l'autre partie de la boucle 40 se déplace en sens opposé au chariot 3. La force de traction sur la courroie est contrôlée avec précision par exemple au moyen d'une friction non représentée entre le moteur et la poulie d'entraînement, et/ou en contrôlant le couple d'entraînement du moteur.

Une touche 44 est montée sur le chariot 3 au moyen d'un porte-touche 45. L'extrémité sphérique de la touche 44 est destinée à être mise en contact avec la pièce à mesurer. Un système de mesure de type capacitif, inductif, optoélectronique ou magnétorésistif permet d'indiquer sur un affichage électronique non représenté la position de la touche 44 ou le déplacement effectué par la touche 44 entre deux points de mesure. Le système de mesure comporte par exemple un capteur électronique monté sur le chariot 3 en regard de la règle 22 et relié par une natte de câble souple non représentée, éventuellement par une liaison radio locale, à une console de commande et d'affichage de mesure.

Selon l'invention, le câble ou la courroie 40 est relié au chariot 3 par l'intermédiaire d'un élément d'articulation constitué dans cet exemple par un cadre 5 et un pivot 30. Le cadre sert d'élément de répartition des forces et comporte un roulement avant 52 pour s'appuyer sur le rail avant 22 du bâti 2 et des roulements arrières 51 pour s'appuyer sur les rails arrières 21 du bâti. Deux colonnes d'écartement 54 servent de butée permettant de maintenir le cadre 5 à distance du chariot 3 en exerçant si nécessaire une pression minimale près du centre de gravité du chariot. Le cadre 5 est lié au chariot 3 par l'intermédiaire du pivot 30 inséré de manière lâche dans une ouverture 34 dans le chariot. L'ouverture 34 est proche du centre géométrique des appuis du chariot. Les forces transmises par le cadre 5 au chariot 3 sont donc toutes exercées en ce point. En particulier, le chariot est entraîné selon l'axe de mesure vertical z uniquement par ce point d'entraînement 34.

Les brins inférieurs et supérieurs du câble ou de la courroie 40 sont fixés au cadre 5 par une ailette 55 montée en un point 53 dans l'axe médian du cadre. Le cadre est vissé sur le pivot 30. L'ailette 55 permet de déplacer manuellement le chariot en l'entraînant par un point proche du centre géométrique des appuis du chariot.

Le jeu entre l'ouverture 34 et le pivot 30 est suffisant pour permettre une rotation du pivot et du cadre selon l'axe y. Par ailleurs, le cadre 5 est monté de manière suffisamment lâche sur le pivot 30 pour pouvoir pivoter facilement selon un axe horizontal x parallèle au cadre et passant par la tête de pivot. Le pivot peut en outre coulisser dans l'ouverture 34 selon son axe longitudinal y.

De cette manière, lorsque l'angle α entre le câble ou la courroie 40 et le bâti 2 augmente, le cadre 5 a la possibilité de pivoter autour de l'axe x. La partie supérieure du cadre 5 a en effet la possibilité de se déplacer, le roulement 52 pouvant même être décollé du rail 22. La partie inférieure du cadre 5 peut se rapprocher ou s'éloigner du chariot 3 grâce au jeu entre le pivot 30 et l'ouverture 34. Les colonnes d'espacement 54 empêchent toutefois des déplacements de trop grande amplitude et permettent par exemple d'éviter que le cadre n'oscille lorsque le chariot est déplacé rapidement le long de l'axe de mesure z.

On comprendra ainsi que les forces et les moments exercés par la traction du câble ou de la courroie 40 ne s'exercent pas directement sur le chariot 3, mais avant tout sur le cadre 5. Les composantes des forces parallèles à l'axe y ainsi que les moments selon l'axe x sont transmises par l'intermédiaire des roulements 51, 52 au bâti 2 qui les absorbe. C'est notamment le cas des moments m selon l'axe horizontal x, qui peuvent être occasionnés notamment par un angle α entre le câble 40 et le bâti 2. Les moments selon l'axe y, provoqués par exemple par un câble qui ne serait pas parfaitement dans l'axe médian du bâti, entraînent un pivotement du cadre 5 qui ne se répercute pas sur le chariot 3.

Outre le câble ou la courroie de traction 40, la natte de câbles non représentée reliant le capteur de mesure au dispositif d'affichage peut également exercer une traction ou un moment sur le chariot 3. C'est notamment le cas lorsque cette natte est tendue en bout de course, ou lorsque le poids des câbles en suspension est supporté par le chariot. Selon l'invention, la natte de câbles est également liée au cadre 5 de manière à ce que ces forces et moments indésirables s'exercent également sur le cadre plutôt que directement sur le chariot. Dans l'exemple illustré, les câbles sont liés au cadre par une pince 56 les maintenant élastiquement à l'arrière du cadre 5. La disposition de la pince à l'arrière du bâti 2 permet également de limiter le risque que la natte de câbles n'entre en contact avec la pièce à mesurer ou avec la touche.

Dans l'exemple illustré, l'élément d'articulation entre le câble ou la courroie 40 et le chariot est constitué par un cadre 5 encadrant le chariot 3. Cette variante a l'avantage de réduire la longueur totale de l'attelage chariot-cadre, et donc d'augmenter la course maximale de mesure le long d'un bâti de hauteur donnée. Il est en outre possible grâce à cette disposition avantageuse de fixer le brin supérieur et le brin inférieur du câble ou de la courroie d'entraînement 40 au même point. Dans une variante moins avantageuse, il serait toutefois également possible d'utiliser un élément d'articulation disposé différemment par rapport au chariot 3, par exemple un ou plusieurs éléments d'articulation montés au-dessus et/ou au-dessous du chariot et dans son prolongement.

Dans l'exemple illustré, la liaison entre le cadre 5 et le chariot 3 est effectuée au moyen d'un pivot permettant une translation selon l'axe horizontal y et des rotations selon les axes horizontaux x et y. D'autres moyens de liaison articulés permettant différents degrés de liberté peuvent cependant facilement être imaginés dans le cadre de cette invention.

## Revendications

1. Colonne de mesure de dimension longitudinale (1) comprenant :
un bâti (2),
un chariot (3) pouvant se déplacer le long d'un axe de mesure (z) le long du bâti,
une touche (44) liée au chariot et destinée à être mise en contact avec la pièce à mesurer,
un dispositif d'entraînement du chariot comprenant un câble ou une courroie (40) pour entraîner ledit chariot en déplacement le long dudit axe de mesure,
un système de mesure de la position dudit chariot (3) le long dudit axe de mesure,
**caractérisé par** un élément d'articulation (5 ; 30) entre ledit câble ou ladite courroie et ledit chariot permettant au moins un pivotement selon un axe de pivotement (x) parallèle au plan dudit chariot.

2. Colonne de mesure selon la revendication 1, dans laquelle ledit axe de pivotement (x) est horizontal.

3. Colonne de mesure selon l'une des revendications précédentes, dans laquelle ledit élément d'articulation (5 ; 30) permet également un pivotement selon un axe (y) perpendiculaire audit plan du chariot.

4. Colonne de mesure selon l'une des revendications précédentes, dans laquelle ledit élément d'articulation comprend un élément de répartition des forces (5) fixé audit câble ou à ladite courroie (40) et un élément de connexion (30) entre ledit élément de répartition des forces (5) et ledit chariot (3).

5. Colonne de mesure selon la revendication 4, dans lequel ledit élément de répartition des forces (5) comporte au moins un roulement (51, 52) pour l'appuyer sur ledit bâti (2).

6. Colonne de mesure selon la revendication précédente, dans lequel ledit élément de répartition des forces (5) comporte au moins un roulement (52) pour s'appuyer sur une face avant (22) dudit bâti (2) et au moins un roulement (51) pour s'appuyer sur une face arrière (21) dudit bâti (2).

7. Colonne de mesure selon la revendication précédente, ledit élément de répartition des forces (5) étant libre de pivoter selon n'importe quel axe horizontal (x, y).

8. Colonne de mesure selon l'une des revendications 4 à 7, dans lequel ledit élément de répartition des forces est conformé en cadre (5) recouvrant partiellement ledit chariot (3).

9. Colonne de mesure selon la revendication précédente, comportant au moins une butée (54) pour limiter l'ampleur des déplacements relatifs entre ledit cadre (5) et ledit chariot (3)

10. Colonne de mesure selon l'une des revendications 4 à 9, dans lequel ledit élément de connexion est constitué par un pivot (30) horizontal.

11. Colonne de mesure selon la revendication 10, ledit pivot (30) étant monté de manière à permettre un déplacement relatif dudit élément de répartition des forces (5) et dudit chariot (3) selon l'axe longitudinal dudit pivot.

12. Colonne de mesure selon l'une des revendications précédentes, dans lequel ledit chariot (3) est entraîné par ledit élément d'articulation (5 ; 30) en un seul point (34) proche du centre géométrique des appuis dudit chariot.

13. Colonne de mesure selon l'une des revendications précédentes, dans lequel le brin supérieur et le brin inférieur dudit câble ou de ladite courroie (40) sont tous deux fixés en un même point audit élément d'articulation (5 ; 30).

14. Colonne de mesure selon la revendication précédente, dans lequel le brin supérieur et le brin inférieur dudit câble ou de ladite courroie (40) sont tous deux fixés audit élément d'articulation (5 ; 30) en un point (53) proche du point d'entraînement (34) dudit-chariot (3).

15. Colonne de mesure de hauteur selon l'une des revendications précédentes, dans lequel ladite touche (44) est montée perpendiculairement au plan (x-z) dudit chariot (3).

16. Colonne de mesure de hauteur selon l'une des revendications précédentes, comprenant au moins un câble lié audit système de mesure sur ledit chariot (3), ledit au moins un câble étant lié audit élément d'articulation (5, 30) de manière à empêcher que ledit câble ou ladite courroie n'exerce une force ou un moment directement sur ledit chariot (3).

## Patentansprüche

1. Säule zur Messung von longitudinalen Dimensionen (1) mit:
einem Gestell (2),
einem Wagen (3), der sich entlang einer Messachse (z) entlang des Gestells bewegen kann,
einem Taster (44), der mit dem Wagen verbunden ist und dazu bestimmt ist, in Kontakt mit dem Messstück gebracht zu werden,
einer Antriebvorrichtung des Wagens mit einem Kabel oder Riemen (40), um den besagten Wagen entlang der besagten Messachse anzutreiben,
einem Messsystem der Position des besagten Wagens (3) entlang der besagten Messachse,
**gekennzeichnet durch** ein Gelenkelement (5; 30) zwischen dem besagten Kabel oder Riemen und dem besagten Wagen, welches mindestens eine Drehung um eine Drehachse (x) parallel zur Ebene des besagten Wagens erlaubt.

2. Messsäule gemäss Anspruch 1, worin die besagte Drehachse (x) waagrecht ist.

3. Messsäule gemäss einem der vorhergehenden Ansprüche, worin das besagte Gelenkelement (5; 30) auch eine Drehung um eine zur besagten Ebene des Wagens senkrechte Achse (y) erlaubt.

4. Messsäule gemäss einem der vorhergehenden Ansprüche, worin das besagte Gelenkelement ein mit dem besagten Kabel oder Riemen (40) befestigtes Kräfteverteilelement (5) und ein Verbindungselement (30) zwischen dem besagten Kräfteverteilelement (5) und dem besagten Wagen (3) umfasst.

5. Messsäule gemäss Anspruch 4, worin das besagte Kräfteverteilelement (5) mindestens ein Lager (51, 52) umfasst, um es auf dem besagten Gestell (2) zu drücken.

6. Messsäule gemäss dem vorhergehenden Anspruch, worin das besagte Kräfteverteilelement (5) mindestens ein Lager (52) umfasst, um es auf eine Vorderseite (22) des besagten Gestells (2) zu drücken, und mindestens ein Lager (51), um auf eine Rückseite (21) des Gestells (2) zu drücken.

7. Messsäule gemäss dem vorhergehenden Anspruch, wobei das besagte Kräfteverteilelement (5) frei ist, gemäss einer beliebigen waagrechten Achse (x, y) zu drehen.

8. Messsäule gemäss einem der Ansprüche 4 bis 7, worin das besagte Kräfteverteilelement als ein den besagten Wagen (3) teilweise bedeckenden Rahmen (5) geformt ist.

9. Messsäule gemäss dem vorhergehenden Anspruch, mit mindestens einem Anschlag (54), um den Umfang der relativen Bewegungen zwischen dem besagten Rahmen (5) und dem besagten Wagen (3) einzuschränken.

10. Messsäule gemäss einem der Ansprüche 4 bis 9, worin das Verbindungselement aus einem waagrechten Drehzapfen (30) besteht.

11. Messsäule gemäss dem Anspruch 10, wobei der besagte Drehzapfen (30) so montiert ist, dass eine relative Bewegung des besagten Kräfteverteilelement (5) und des besagten Wagens (3) gemäss der Längsachse des besagten Drehzapfens erlaubt wird.

12. Messsäule gemäss einem der vorhergehenden Ansprüche, worin der besagte Wagen (3) durch das besagte Gelenkelement (5; 30) an einem einzigen Punkt (34) nahe dem geometrischen Zentrum der Stützen des besagten Wagens angetrieben wird.

13. Messsäule gemäss einem der vorhergehenden Ansprüche, worin der obere und untere Strang des besagten Kabels oder Riemens (40) beide an einem gleichen Punkt an dem besagten Gelenkelement (5; 30) befestigt sind.

14. Messsäule gemäss dem vorhergehenden Anspruch, worin der obere und untere Strang des besagten Kabels oder Riemens (40) beide am Gelenkelement (5; 30) an einem Punkt (53) nahe dem Antriebspunkt (34) des besagten Watens (3) befestigt sind.

15. Höhemesssäule gemäss einem der vorhergehenden Ansprüche, worin der besagte Taster (44) senkrecht zur Ebene (x-z) des besagten Wagens (3) montiert ist.

16. Höhemesssäule gemäss einem der vorhergehenden Ansprüche, mit mindestens einem mit dem besagten Messsystem auf dem besagten Wagen (3) verbundenen Kabel, wobei das benannte mindestens eine Kabel mit dem besagten Gelenkelement (5, 30) so verbunden ist, dass verhindert wird, dass besagtes Kabel oder besagter Riemen eine Kraft oder einen Moment direkt auf den besagten Wagen (3) ausübt.

## Claims

1. Column for measuring longitudinal dimensions (1) comprising:
a supporting frame (2),
a carriage (3) capable of moving along a measuring axis (z) along the supporting frame,
a probe tip (44) connected to said carriage and designed to be brought into contact with the piece to be measured,
a driving device of the carriage comprising a cable or belt (40) for moving said carriage along said measuring axis,
a system for measuring the position of said carriage (3) along said measuring axis,
**characterized by** an articulation element (5; 30) between said cable or belt and said carriage allowing at least one pivoting along a pivoting axis (x) parallel to the plane of said carriage.

2. Measuring column according to claim 1, wherein said pivoting axis (x) is horizontal.

3. Measuring column according to one of the preceding claims, wherein said articulation element (5; 30) also allows a pivoting along an axis (y) perpendicular to said plane of the carriage.

4. Measuring column according to one of the preceding claims, wherein said articulation element comprises a force-spreading element (5) fastened to said cable or belt (40) and a connecting element (30) between said force-spreading element (5) and said carriage (3).

5. Measuring column according to claim 4, wherein said force-spreading element (5) comprises at least one bearing (51, 52) for resting on said supporting frame (2).

6. Measuring column according to the preceding claim, wherein said force-spreading element (5) comprises at least one bearing (52) for resting on a front side (22) of said supporting frame (2) and at least one bearing (51) for resting on a rear side (21) of said supporting frame (2).

7. Measuring column according to the preceding claim, said force-spreading element (5) being free to pivot along any horizontal axis (x, y).

8. Measuring column according to one of the claims 4 to 7, wherein said force-spreading element is shaped as a frame (5) partially covering said carriage (3).

9. Measuring column according to the preceding claim, comprising at least one stop (54) for limiting the magnitude of the relative displacements between said frame (5) and said carriage (3).

10. Measuring column according to one of the claims 4 to 9, wherein said connecting element is constituted by a horizontal pivot (30).

11. Measuring column according to claim 10, said pivot (30) being mounted so as to allow a relative displacement of said force-spreading element (5) and of said carriage (3) along the longitudinal axis of said pivot.

12. Measuring column according to one of the preceding claims, wherein said carriage (3) is driven by said articulation element (5; 30) at a single point (34) close to the geometrical center of the stays of said carriage.

13. Measuring column according to one of the preceding claims, wherein the upper end and the lower end of said cable or belt (40) are both fastened at a same point to said articulation element (5; 30).

14. Measuring column according to the preceding claim, wherein the upper end and the lower end of said cable or belt (40) are both fastened to said articulation element (5; 30) at a point (53) close to the driving point (34) of said carriage (3).

15. Height-measuring column according to one of the preceding claims, wherein said probe tip (44) is mounted perpendicularly to the plane (x-z) of said carriage (3).

16. Height-measuring column according to one of the preceding claims, comprising at least one cable connected to said measuring system on said carriage (3), said at least one cable being connected to said articulation element (5; 30) so as to prevent said cable or belt from exerting a force or a moment directly onto said carriage (3).
